# EUROPEAN PATENT APPLICATION

(11) **EP 2 660 634 A1**
(43) Date of publication of application: **06.11.2013**
(21) Application number: 11853502.0
(22) Date of filing: 21.12.2011
(51) Int. Cl.: G02B 6/255

(54) **OPTICAL FIBER FUSION-CONNECTING DEVICE**

(30) Priority: 28.12.2010 JP 2010292393
(71) Applicant: SEI Optifrontier Co., Ltd., Yokohama-shi, Kanagawa 244-8589 (JP)
(72) Inventor: TAKAYANAGI Hiroshi, Yokohama-shi Kanagawa 244-8589 (JP); SATO Ryuichiro, Yokohama-shi Kanagawa 244-8589 (JP); SAKAMOTO Yasuhiro, Yokohama-shi Kanagawa 244-8589 (JP)
(74) Representative: HOFFMANN EITLE
(86) International application number: PCT/JP2011/079743
(87) International publication number: WO 2012/090842

(57) **Abstract**

An optical fiber fusion-splicing device 1 is equipped with a fusing unit 3 disposed on a housing 2, which fuses optical fibers F to each other, and a windproof cover 6 that prevents winds from entering the fusing unit 3. The windproof cover 6 is provided with a blocking elastic body 63 arranged so as to block, in cooperation with a blocking elastic body 21 of the housing 2, an inlet 62 for introducing the optical fiber F into the fusing unit 3, a bias spring 64 that biases the blocking elastic body 63 toward the blocking elastic body 21, and a transmission member 65 that transmits a biasing force of the bias spring 64 to the blocking elastic body 63.

## Description

### Technical Field

The present invention relates to an optical fiber fusion-splicing device for fusing and splicing optical fibers to each other.

### Background Art

As a conventional optical fiber fusion-splicing device in the technical field mentioned above, one equipped with a windshield which is put on a main unit of the optical fiber fusion-splicing device so as to cover the upper side of an arc discharge part and prevent winds from entering the arc discharge part has been known, for example, as disclosed in Patent Literature 1. This optical fiber fusion-splicing device forms an inlet for introducing an optical fiber into the arc discharge part by making a slit in a side face of the windshield and partly closing the slit with a shutter.

### Citation List

### Patent Literature

Patent Literature 1: Japanese Utility Model Application Laid-Open No. 3-29807

### Summary of Invention

### Technical Problem

For utilizing the above-mentioned conventional optical fiber fusion-splicing device for fusion-splicing optical fiber cables having a diameter of 5 mm or greater such as drop cables, for example, it is necessary to form a relatively large inlet which allows the optical fiber to be introduced into the arc discharge part. When such a large inlet is formed, however, a large gap occurs between the inlet and a small optical fiber having a diameter of 0.25 mm, for example, introduced into the arc discharge part, thereby lowering the windproof effect of the windshield.

In view of such circumstances, it is an object of the present invention to provide an optical fiber fusion-splicing device which can inhibit the windproof effect from lowering.

### Solution to Problem

The optical fiber fusion-splicing device of the present invention is an optical fiber fusion-splicing device for fusing and splicing optical fibers to each other. The optical fiber fusion-splicing device comprises a fusing unit that fuses the optical fibers to each other, which is disposed on a housing; a windproof cover that prevents winds from entering the fusing unit; a blocking elastic body arranged so as to block at least a part of an inlet for introducing one of the optical fibers into the fusing unit; and a biasing elastic body that biases the blocking elastic body in a predetermined direction.

The optical fiber fusion-splicing device is equipped with the windproof cover that prevents winds from entering the fusing unit which fuses optical fibers to each other. In the windproof cover, the inlet for one of the optical fibers is blocked by the blocking elastic body and the housing when a biasing elastic body biases the blocking elastic body toward the housing, for example. Therefore, inserting an optical fiber into the inlet deforms and displaces the blocking elastic body, so as to adjust the gap between the inlet and the optical fiber to a size appropriate for the diameter of the optical fiber. This can inhibit the windproof cover from lowering its windproof effect for optical fibers having various diameters.

Preferably, the optical fiber fusion-splicing device further comprises a transmission member that transmits a biasing force of the biasing elastic body to the blocking elastic body. This allows the biasing force of the biasing elastic body to be transmitted favorably to the blocking elastic body. A part of the windproof cover may be arranged between the blocking elastic body and the biasing elastic body.

In the optical fiber fusion-splicing device, the blocking elastic body may include a first blocking elastic body provided with the windproof cover and a second blocking elastic body provided with the housing, the first and second blocking elastic bodies cooperating with each other so as to block the inlet. This blocks the inlet from two directions, thereby preventing the optical fibers from coming into contact with the inner surface and corners of the inlet and being damaged and so forth. Preferably, in the optical fiber fusion-splicing device, the blocking elastic body is made of a sponge material or rubber material, while the biasing elastic body is a spring. In this case, the elastic force of the spring and deformation of the sponge material or the like can securely adjust the gap between the inlet and the optical fiber to a size appropriate for the diameter of the optical fiber.

### Advantageous Effects of Invention

The present invention can provide an optical fiber fusion-splicing device which can inhibit the windproof effect from lowering.

### Brief Description of Drawings

Fig. 1 is a perspective view illustrating the exterior of one embodiment of the optical fiber fusion-splicing device in accordance with the present invention with a windproof cover closed;
Fig. 2 is a perspective view illustrating the exterior of the one embodiment of the optical fiber fusion-splicing device in accordance with the present invention with the windproof cover opened;
Fig. 3 is a side view of the optical fiber fusion-splicing device illustrated in Fig. 1 in the vicinity of an inlet;
Fig. 4 is a diagram illustrating the rear face of the windproof cover in the vicinity of the inlet depicted in Fig. 1; and
Fig. 5 is a partial sectional view of the optical fiber fusion-splicing device taken along the line V-V of Fig. 1.

### Description of Embodiments

In the following, preferred embodiments of the optical fiber fusion-splicing device in accordance with the present invention will be explained in detail with reference to the drawings.

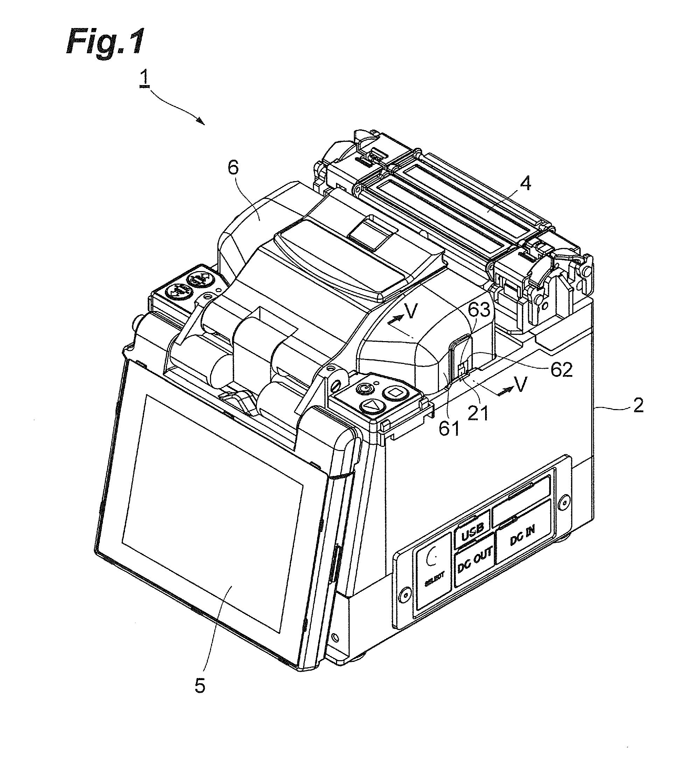

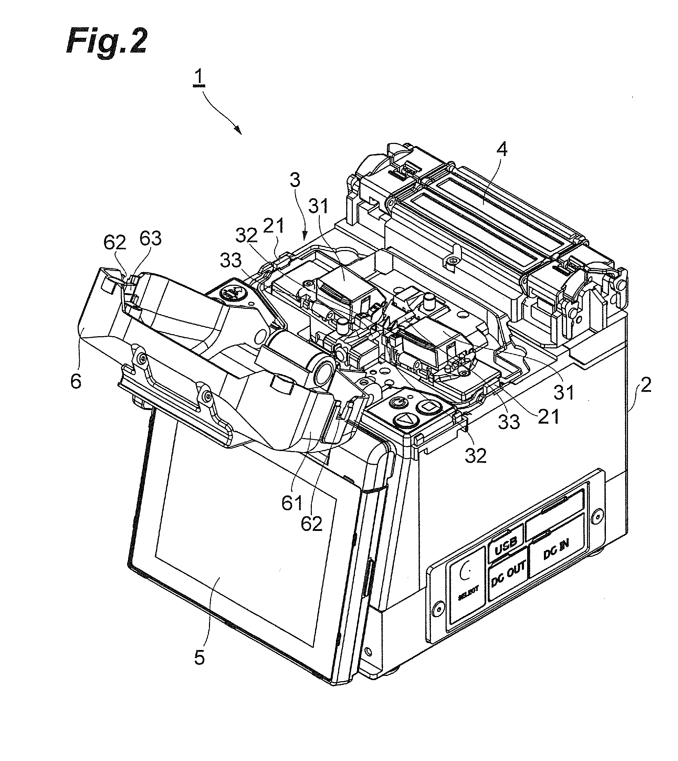

Figs. 1 and 2 are perspective views illustrating the exterior of one embodiment of the optical fiber fusion-splicing device in accordance with the present invention. As illustrated in Figs. 1 and 2, an optical fiber fusion-splicing device 1 is equipped with a box-shaped housing 2. The upper part of the housing 2 is provided with a fusing unit 3 that fuses optical fibers to each other and an optical fiber reinforcing heating device 4 that heats and shrinks a fiber reinforcement sleeve (not depicted) covering the fusion-spliced part of the optical fibers fused by the fusing unit 3.

The optical fiber fusion-splicing device 1 is also equipped with a monitor 5 that displays states of fusion-splicing of the optical fibers captured by a camera (not depicted) arranged within the housing 2. The optical fiber fusion-splicing device 1 further comprises a windproof cover 6 that prevents winds from entering the fusing unit 3.

The fusing unit 3 has a pair of optical fiber holders 31 that holds and secures the respective optical fibers to be fused; a pair of fiber positioning parts 32 arranged between the optical fiber holders 31, which positions leading end parts of the optical fibers held by the respective optical fiber holders 31; and a pair of discharge electrodes 33, arranged between the fiber positioning parts 32, which fuses the leading ends of the optical fibers to each other by arc discharge.

The windproof cover 6 is joined to the housing 2 so as to cover the fusing unit 3 in an openable and closable manner. Each of side faces 61 of the windproof cover 6 is formed with an inlet 62 for introducing an optical fiber into the fusing unit 3 (i.e., to each of the optical fiber holders 31). Each inlet 62 is a substantially rectangular cutout.

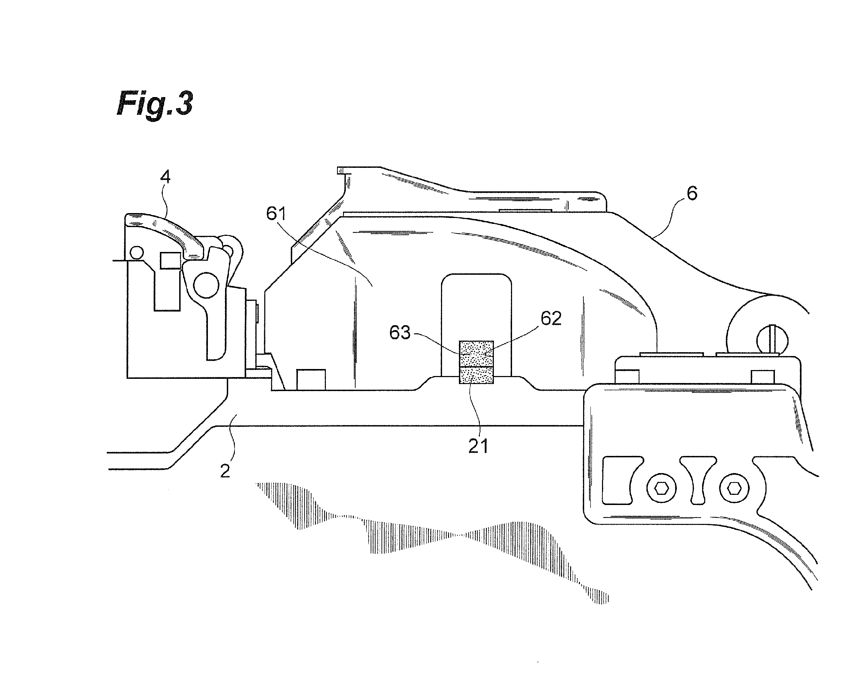

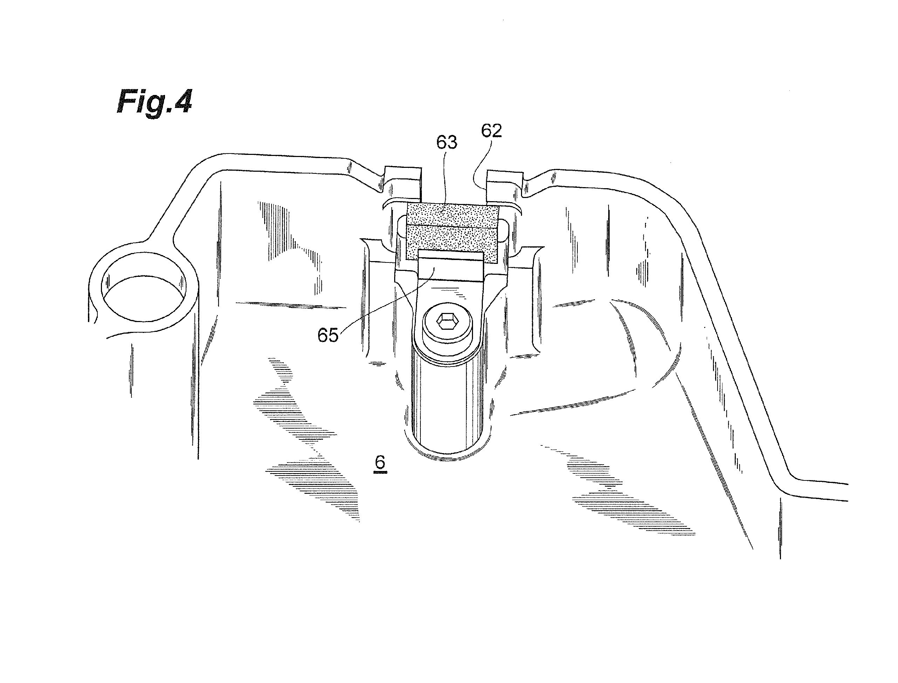

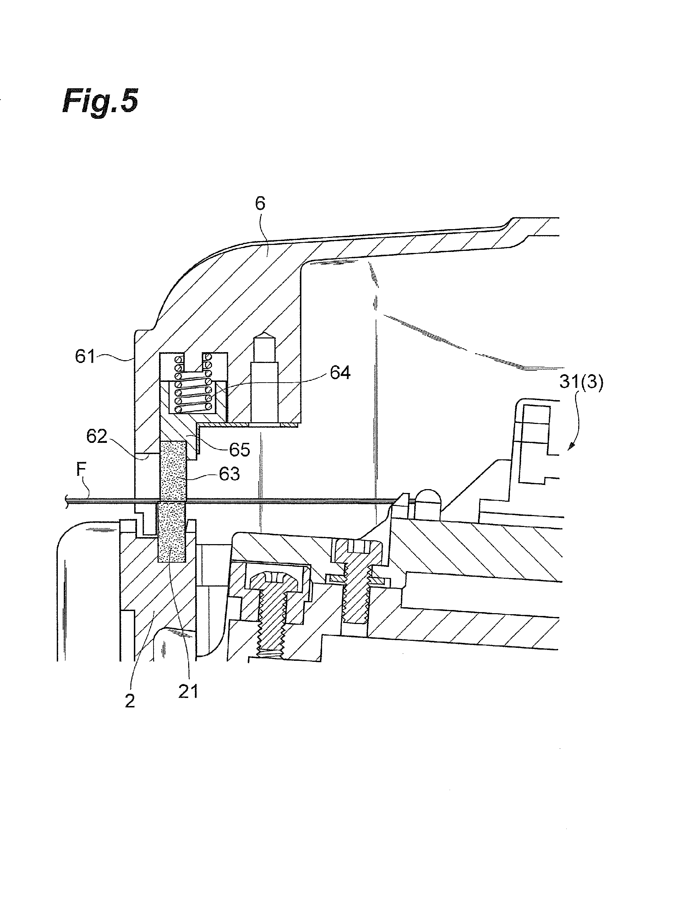

Fig. 3 is a side view of the optical fiber fusion-splicing device 1 in the vicinity of the inlet 62. Fig. 4 is a diagram illustrating the rear face of the windproof cover 6 in the vicinity of the inlet 62. Fig. 5 is a partial sectional view of the optical fiber fusion-splicing device 1 taken along the line V-V of Fig. 1. As illustrated in Figs. 3 to 5, the windproof cover 6 is provided with a blocking elastic body 63 which is arranged so as to block at least an upper part of the inlet 62 on the rear face side of the windproof cover 6. The blocking elastic body 63 may be made of a sponge material or rubber material, for example.

On the other hand, the housing 2 is provided with a blocking elastic body 21 so as to block a lower part of the inlet 62 at a position corresponding to the blocking elastic body 63 in a state where the windproof cover 6 is closed. Therefore, when the windproof cover 6 is closed, the blocking elastic body 63 cooperates with the blocking elastic body 21 provided with the housing 2, so as to block the inlet 62. The blocking elastic body 21 may also be made of a sponge material or rubber material, for example. Each of the blocking elastic bodies 21, 63 is substantially a rectangular parallelepiped.

The windproof cover 6 has a mechanism that biases the blocking elastic body 63 toward the housing 2 (i.e., toward the blocking elastic body 21). That is, a part of the windproof cover 6 is arranged between a bias spring (biasing elastic body) 64 that biases the blocking elastic body 63 toward the blocking elastic body 21 and the blocking elastic body 63. The windproof cover 6 is further provided with a transmission member 65 that transmits the biasing force of the bias spring 64 to the blocking elastic body 63. Hence, butting the blocking elastic bodies 63, 21 against each other under the biasing force of the bias spring 64 through the transmission member 65 blocks the inlet 62 of the windproof cover 6.

When introducing an optical fiber F into the fusing unit 3 in the optical fiber fusion-splicing device 1 having thus constructed windproof cover 6, the windproof cover 6 is opened at first as illustrated in Fig. 2. After holding and securing the optical fiber F to the optical fiber holder 31, the optical fiber F extending from the optical fiber holder 31 is arranged on the blocking elastic body 21 of the housing 2. In this state, the windproof cover 6 is closed.

When the windproof cover 6 is closed while the optical fiber F is arranged on the blocking elastic body 21, the optical fiber F is pressed against the blocking elastic body 21 under the biasing force of the bias spring 64 and the elastic force of the blocking elastic body 63. This prevents the optical fiber F from shifting its position. Closing the windproof cover 6 in such a state also causes deformation (and displacement) in the blocking elastic bodies 21, 63 along the outer form of the optical fiber F, thereby blocking the gap between the inlet 62 and the optical fiber F. This prevents winds from entering the fusing unit 3 through the inlet 62.

As explained in the foregoing, the optical fiber fusion-splicing device 1 is equipped with the windproof cover 6 and thus can prevent winds from entering the fusing unit 3 when fusion-splicing optical fibers F to each other. In particular, the windproof cover 6 blocks the inlet 62 by biasing the blocking elastic body 63 toward the blocking elastic body 21 under the biasing force of the bias spring 64. Therefore, when the optical fiber F is introduced from the inlet 62, the gap between the inlet 62 and the optical fiber F is adjusted to a size appropriate for the diameter of the optical fiber F because of the deformation and displacement of the blocking elastic body 63 and the deformation of the blocking elastic body 21. This can inhibit the windproof cover 6 from lowering its windproof effect for the optical fibers F having various diameters.

The foregoing embodiment explains one embodiment of the optical fiber fusion-splicing device in accordance with the present invention, while the optical fiber fusion-splicing device in accordance with the present invention is not limited to the optical fiber fusion-splicing device 1 mentioned above. The optical fiber fusion-splicing device in accordance with the present invention may modify the optical fiber fusion-splicing device 1 within a scope not altering the gist of each claim.

For example, the transmission member 65 may have various forms in order to transmit the biasing force of the bias spring 64 to the blocking elastic body 63. For transmitting the biasing force of the bias spring 64 to the blocking elastic body 63 uniformly in the width direction of the blocking elastic body 63 (a direction intersecting the extending direction of the optical fiber F), the lower face of the transmission member 65 (the surface in contact with the blocking elastic body 63) may be formed into a flat surface along the upper face of the blocking elastic body 63.

Alternatively, for transmitting the biasing force of the bias spring 64 to the blocking elastic body 63 more strongly at both ends thereof than in the widthwise center part thereof, the lower face of the transmission member 65 may be formed into a curved surface which is convex to the inner side of the transmission member 65. This can deform the blocking elastic body 63 securely along the outer form of the optical fiber F.

The blocking elastic body 21 is not always necessary in the housing 2. That is, the optical fiber fusion-splicing device 1 may be in such a mode that the blocking elastic body 63 and the housing 2 per se without the blocking elastic body 21 cooperate with each other, so as to block the inlet 62. Instead, a biasing elastic body for biasing the blocking elastic body 21 toward the windproof cover 6 may be provided separately, so as to butt the blocking elastic bodies 21, 63 against each other in cooperation with (or in place of) the biasing elastic member 64, thereby blocking the inlet 62.

### Reference Signs List

1...Optical fiber fusion-splicing device; 2...Housing; 3...Fusing unit; 6... Windproof cover; 21, 63...Blocking elastic body; 62...Inlet; 64...Bias spring (biasing elastic body); 65...Transmission member

## Claims

1. An optical fiber fusion-splicing device for fusing and splicing optical fibers to each other, the optical fiber fusion-splicing device comprising:
a fusing unit that fuses the optical fibers to each other, which is disposed on a housing;
a windproof cover that prevents winds from entering the fusing unit;
a blocking elastic body arranged so as to block at least a part of an inlet for introducing one of the optical fibers into the fusing unit; and
a biasing elastic body that biases the blocking elastic body in a predetermined direction.

2. The optical fiber fusion-splicing device according to claim 1, further comprising a transmission member that transmits a biasing force of the biasing elastic body to the blocking elastic body.

3. The optical fiber fusion-splicing device according to claim 1 or 2, wherein a part of the windproof cover is arranged between the blocking elastic body and the biasing elastic body.

4. The optical fiber fusion-splicing device according to one of claims 1 to 3, wherein the biasing elastic body biases the blocking elastic body toward the housing.

5. The optical fiber fusion-splicing device according to one of claims 1 to 4, wherein the blocking elastic body includes a first blocking elastic body provided with the windproof cover and a second blocking elastic body provided with the housing; and
wherein the first and second blocking elastic bodies cooperate with each other so as to block the inlet.

6. The optical fiber fusion-splicing device according to one of claims 1 to 5, wherein the blocking elastic body is made of a sponge material or rubber material; and
wherein the biasing elastic body is a spring.
